# EUROPEAN PATENT APPLICATION

(11) **EP 1 018 297 A1**
(43) Date of publication of application: **12.07.2000**
(21) Application number: 00200039.6
(22) Date of filing: 05.01.2000
(51) Int. Cl.: A01K 11/00

(54) **Method for the biometric identification of animals**

(30) Priority: 05.01.1999 NL 1010951; 10.03.1999 NL 1011509
(71) Applicant: N.V. Nederlandsche Apparatenfabriek NEDAP, 7141 DC Groenlo (NL)
(72) Inventor: Ebele, Marten, 7244 NN Barchem (NL); Kuip, Anton, 7141 DG Groonlo (NL)
(74) Representative: Ottevangers, Sietse Ulbe

(57) **Abstract**

The invention relates to a method for identifying an animal. By means of at least one image recording apparatus (2), first visual information about at least one of the eyes (18) of the animal as well as second visual information of the animal (14) are obtained. The obtained first and second visual information is stored and/or processed in combination, the first visual information comprising visual eye information about the appearance of an iris and/or a retina of the at least one eye. On the basis of the second visual information, it can be determined to which eye the visual eye information relates.

## Description

This invention relates to a method for the identification of an animal. Such a method is known per se. In the known methods, an object, such as an earmark, which is provided with a life number or a transponder accommodated in an earmark, bolus or housing to be subcutaneously fitted, is added to the animal. The transponder may then be provided with an identification code which can be read out by means of an electromagnetic interrogation field. In each of the cases, however, it is necessary that an object be added to the animal. This entails a number of disadvantages. Thus, the use of an earmark is experienced by the public as unaesthetic. Fitting a transponder subcutaneously or placing a bolus in the stomach of the animal has as a disadvantage that these objects, when the animal is slaughtered, may end up in the products intended for consumption. In addition, the objects can be removed and optionally replaced with other objects, which entails susceptibility to fraud.

The object of the invention is to meet the disadvantages outlined and, accordingly, is characterized in that by means of at least one image recording apparatus, first visual information is obtained about at least one eye of the animal, and second visual information is obtained from the animal, the first visual information comprising at least visual eye information about the appearance of an iris and/or retina of the eye of the animal, the second visual information being suitable for determining to which eye of the animal the visual eye information relates, while the first and second visual information are stored in combination for further processing. Preferably, this information stored in combination is encrypted, i.e. stored in coded form. As a result, the first and second information cannot be separated from each other, for instance to distribute only the second visual information, independently of the first visual information. This further reduces the chances of fraud.

In the method according to the invention, it is no longer necessary to add an object to the animal. It appears that on the basis of the eye a very reliable identification can be carried out. Since, according to the invention, further the second visual information about the animal is obtained, it can be checked if a recording is made of the correct eye. Thus, it can be agreed that always the iris of the left eye will be used for identification and that the second visual information always shows the eye to which the visual eye information relates. When the second visual information comprises, for instance, a side view of at least a part of the head of the animal, which part comprises the eye mentioned, it is thus established and it can thus be checked that indeed the correct eye is analyzed on the basis of the visual eye information. It is also possible that the second visual information comprises visual information about at least a part of the head of the animal, which part comprises the eye mentioned. Further, it is possible, for instance, that on the basis of the second visual information the age of the animal is estimated. This provides an additional checking possibility in identifying the animal. Then, in particular, further the time at which the first and second visual information is obtained is stored for further processing. On the basis of the time at which the first and second visual information is obtained, the age of the animal can then be calculated and be compared with the estimated age on the basis of the second visual information. Preferably, further the place where the first and second visual information has been obtained is stored for further processing. In this way, it can be exactly registered where the animal is and has been at specific checking moments during its life with a high degree of fraud resistance. Further, all information that is stored, including the first and second visual information, the time, the place, and the like, can be encoded in a manner known per se. The stored information can then be read in combination only when a key is known.

According to a particular embodiment of the method, the first and second image recording are made approximately simultaneously.

It will be clear that on the basis of the visual eye information, the animal can be identified on the basis of previously stored visual eye information of the animal. The method for establishing the identity of the animal accordingly is characterized in that further birth information is stored about the date of birth of the animal and that this birth information is used to check whether the estimated age agrees with the birth information.

The invention will presently be further elucidated with reference to the drawing.

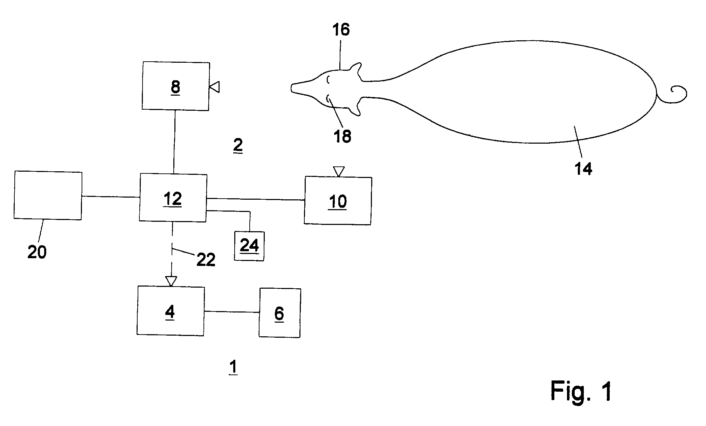

In Fig. 1, reference numeral 1 designates a system for carrying out a method according to the invention. The system 1 comprises an image recording apparatus 2. The system 1 further comprises a computer 4 and optionally a display 6 linked to the computer 4.

The image recording apparatus 2 comprises a first camera 8 and a second camera 10. The first camera 8 and the second camera 10 are connected with the central processing unit 12 of the image recording apparatus 2.

When an animal 14 is to be identified, the animal and the image recording apparatus 2 are brought into mutual proximity, as shown in Fig. 1. According to the method for the identification of the animal 14, using the first camera 8 visual information is obtained about at least one of the eyes of the animal. Further, by means of the second camera 10, second visual information about the animal is obtained. The first visual information comprises visual eye information about the appearance of an iris and/or a retina of the at least one eye 18 of the head 16. In this example, the first visual information comprises visual eye information of the left eye 18 of the animal. Regarding the arrangement of the second camera relative to the first camera, the second visual information in this example comprises a side view of at least a part of the head 16 of the animal, which part includes the eye mentioned. In this example, the left eye of the animal is disposed approximately in the center (of the image) of the second visual information when the visual eye information relates to the left eye. In other words, the second visual information is obtained in such a manner that the eye mentioned is located at a predetermined position in the second visual information if the visual eye information relates to the eye mentioned. As a result, on the basis of the side view, it can be verified that always the left eye 18 of the animal is analyzed on the basis of the visual eye information. More generally, therefore, the second visual information shows the eye of the animal to which the visual eye information relates, such that on the basis of the second visual information it can established to which eye of the animal the visual eye information relates.

The first and second visual information is fed to the central processing unit 12. In this example, the image recording apparatus 2 further comprises a GPS receiver 20. The GPS receiver 20 determines the position of the image recording apparatus 2. Information about this position is likewise fed to the central processing unit 12. The thus obtained first visual information, second visual information and the position information is stored relationally in the computer 4. To that end, the central processing unit 12 is linked to the computer 4 via a line 22. The link 22 can consist, for instance, of a modem connection via a telephone line. The thus obtained first visual information, second visual information and position information are stored in a database of the computer 4. In this example, this information stored in combination is encrypted in a manner known per se, i.e. encoded with the aid of a password. Only when the password is known, can the information stored in combination be consulted. Resistance to fraud is thus improved.

In particular, the image recording apparatus 2 also comprises an input unit 24, in which optionally by hand the life number of the animal 14 can be fed to the central processing unit 12. The central processing unit 12 then ensures that the life number is stored in the database of the computer 4, again in combination with the first and second visual information and the optional position information. The computer 4 can be arranged, for instance, centrally.

Further, it is possible that the central processing unit 12 comprises a clock. This clock can then also generate time-representing information which is further processed in combination with the first and second visual information. This also means that the time at which the recordings are made by means of the cameras 8 and 10 is stored in the database of the computer 4 via the line 22. In particular, the image recording apparatus may further comprise an identification code of the image recording apparatus. This code can also be supplied to the computer 4 in combination with the other information mentioned. On the basis of this information, it can then be established by which recording equipment the information has been generated. The identification code of the recording apparatus in turn can be registered in combination with the owner of the apparatus.

In this way, each time the animal is identified anywhere in the course of its life by means of the recording apparatus 2, the first visual information, the second visual information, the position and the time at which the identification occurred are stored in the database of the computer 4. Also, as stated, the life number of the animal 14 can be added to the information stored in the database. In this way, a chronological overview is obtained of where and when and with what apparatus what animal was identified.

The identification of the animal itself can be carried out on the basis of the visual eye information. This can be done as follows. Suppose the identity of the animal 14 is not known. The animal 14 and the recording apparatus 2 are again brought into mutual proximity, as shown in Fig. 1. By means of the recording apparatus 2, again the first and second visual information is determined as already described hereinbefore. Further, by means of the GPS receiver 20, information about the position of the image recording apparatus is supplied to the central processing unit 12. Also, again the time of the recording is added to the first and second visual information and the identity of the recording apparatus 2. Next, via line 22, the information so obtained is supplied to the computer 4. Thereafter, by means of the computer 4, on the basis of the visual eye information and the database in which the identity, together with the corresponding visual eye information, of a multiplicity of animals is stored, the identity of the animal is determined. This is carried out by comparing the visual eye information of the animal with the visual eye information of the animals stored in the database and selecting from the database the visual eye information that agrees with the visual eye information obtained from the animal. When the visual eye information has been selected which is associated with visual eye information obtained by means of the recording apparatus 2, the identity of the animal has been established. The associated life number can then be read out from the database. Moreover, the second visual information obtained by means of the second camera 10 can be displayed on the display 6. A good judge of animals can determine on the basis of the geometry of the head 16 whether, for instance, the age agrees with the age of the animal which has been selected in the database. It is also possible that in the same database the second visual information is stored as well. This second visual information about the geometry of the head of the animal can then be displayed as well. When the identity of the animal has been established, it is likewise possible that, for instance, the life number of the animal is applied via the line 22 to the central processing unit 12. The central processing unit 12 may then further comprise a display on which the life number is displayed. In this way, the life number of the animal 14 can be determined directly. Also on this display, for checking purposes, the two heads may be displayed, as has been discussed hereinbefore. It is also possible that the database does not comprise the second visual information. What *is* known is to which eye of an animal the visual eye information stored in the database relates. Then, in the identification of an animal, as it were, on the basis of the second visual information obtained it can be checked that the correct eye of the animal is used for identification of the animal.

The invention is not limited in any way to the embodiment outlined hereinbefore. Instead of an identification, it is possible, in an entirely analogous manner, to carry out a verification of the identity of the animal. In this example, an image recording apparatus is used which comprises a first camera for obtaining the first visual information and a second camera for obtaining the second visual information. By means of the first camera, a first image recording is made for obtaining the first visual information, while by means of the second camera 10 a second image recording is made for obtaining the second visual information. The first and second recordings are then carried out substantially simultaneously. Further, in the example, the second recording comprises a side view of at least a part of the head of the animal. Because the second image recording comprises a side view of the head 16 of the animal, which contains the eye registered by the first camera, while the position of the first camera relative to the second camera is predetermined, it can be ascertained at all times that always a recording is made of the correct eye of the animal. In this example, the eye in question is the left eye 18. The camera 8 is of a type known per se, capable of making recordings of a sufficiently high resolution to obtain visual eye information of the iris of the eye 18. The camera 10 is so arranged that in any case the geometry of the head of the animal is determined. The second camera 10 may then moreover be so arranged that a recording of the animal in its entirety is obtained. This makes it still easier, on the basis of the second visual information, to assess the age of the animal or to check the identity. In the database, further, birth information may be stored about the birth date of the animal. This birth information can be used to check whether the estimated age corresponds with the birth information. This, too, again, is an additional checking operation to determine whether on the basis of the iris of the animal the correct animal has been identified.

The camera 8 can also be used to obtain information about the appearance of the retina. It appears that the retina of each animal is unique as well, so that the retina too can serve as a fingerprint of the animal for identification purposes.

In the method described hereinbefore, it is also possible that the first visual information comprises first visual eye information of a first eye of the animal as well as second visual eye information of a second eye of the animal. The second visual information is then suitable to determine to which eye of the animal the first visual eye information and the second visual eye information, respectively, relate.

The camera 10 can even be omitted altogether. In that case, by means of the camera 8, both the first visual information and the second visual information are obtained. In that case, the first visual information comprises visual eye information about the appearance of the iris or the retina. The second visual information shows at least a part of the head of the animal which includes the eye mentioned. Then the eye mentioned is again located, in the second visual information, at a predetermined position (for instance the center of the recording) if the visual eye information relates to the eye mentioned. It is also possible that the second visual information shows the eye mentioned, including the immediate surroundings of that eye, so that, as it were, for instance on the basis of the form of the eyelids, the eyelashes and the like, it can be established whether the eye involved is the right or left eye.

It is also possible that the second visual information is obtained in such a manner that the eye mentioned is located at a predetermined position in the second visual information if the visual eye information relates to the eye mentioned. In this case, the first and second visual information, respectively, can have been obtained with the first camera 8 and the second camera 10. In that case, it is also possible that the first and second visual information are described with the one and the same camera as already set out hereinbefore.

According to another variant, the second camera 10 can be so arranged that the second visual information shows both the animal and the first camera 8. As a result, it can be established to which eye of the animal the visual eye information relates. If by means of a recording unit 2, as described hereinabove, the thus obtained first visual information, second visual information, the time at which the visual information has been obtained, as well as the position at which the visual information has been determined, are supplied in combination to the database of the computer 4 by means of the central processing unit 12, also a record can be kept of what animal was where at what time. It is moreover possible on the basis of the first visual information by means of the computer 4 to establish the identity of the animal 14 and, for instance in the form of a life number, feed it back to the central processing unit 12 when at the moment when the recording of the animal 14 is made, the identity of the animal is known. One possibility is also to feed the second visual information stored in the database to the central processing unit 12. The central processing unit 12 may then further comprise a display to display the second visual information. A user present at the image recording apparatus 2 can then check again whether the second visual information supposed to belong to the animal 14, as selected from the database on the basis of the first visual information, agrees with the geometry of the head 16 of the animal. According to the method of the invention, it is therefore possible to identify animals when the identity of the animal is not known yet and it is possible to store identification information of the animal in databases to obtain an overview of which animals were where at what time.

It is also possible, instead of carrying out the identification of the animals, to carry out a verification of the identity of the animals. The assumption is then that the identity of the animal is presumed to be known and that only a check of this identity is to be carried out. Then the first visual information together with the identity of the animal of a multiplicity of animals is stored in the database as has been described hereinbefore. Of the animal whose identity is to be verified, again by means of an image recording apparatus first visual information about at least one of the eyes of the animal is obtained. Also, the second visual information is obtained, while the first visual information is used for obtaining visual eye information about the appearance of the iris and/or the retina of the at least one eye of the animal. The second visual information is again suitable to determine to which eye of the animal the visual information relates. Next, by means of the computer mentioned earlier, and by means of the database mentioned, on the basis of the presumed identity of the animal, the visual eye information associated with this presumed identity is selected from the database. This visual eye information is compared with the first visual eye information which has been obtained by means of the image recording apparatus. When it appears from this comparison that the first visual eye information which has been obtained by means of the image recording apparatus corresponds with the visual eye information stored in the database, this means that the presumed identity of the animal is the correct one. When there is no agreement, the presumed identity is not correct and the identity can optionally be determined as has been described hereinbefore.

Because the first and second recordings are made at least substantially simultaneously and preferably simultaneously, it is not possible first to obtain the first visual information of a first animal and subsequently to obtain the second visual information of the second animal and to store these in combination. Carrying out such a form of fraud is therefore not possible. When the camera 10 is omitted, as discussed hereinbefore, then by means of the camera 8 both the first and the second visual information are obtained simultaneously. Nor is it possible to combine first visual information of a first animal with the second visual information of a second animal. According to the method of the invention, the chance that an incorrect identification is carried out has therefore been reduced to an absolute minimum.

## Claims

1. A method for making an animal identifiable, identifying an animal, or verifying the identity of an animal, characterized in that by means of at least one image recording apparatus first visual information is obtained about at least one eye of the animal, and second visual information is obtained from the animal, the first visual information comprising at least visual eye information about the appearance of an iris and/or retina of the aye of the animal, the second visual information being suitable to determine to which eye of the animal the visual eye information relates, and wherein the first and second visual information are stored in combination for further processing.

2. A method according to claim 1, characterized in that the second visual information shows the eye of the animal to which the visual eye information relates, such that on the basis of the second visual information it can be established to which eye of the animal the visual eye information relates.

3. A method according to claim 1 or 2, characterized in that the second visual information comprises visual information about at least a part of the head of the animal, which part comprises said eye.

4. A method according to claim 1, 2 or 3, characterized in that the second visual information is obtained in such a manner that said eye is located at a predetermined position in the second visual information if the visual eye information relates to said eye.

5. A method according to claim 1 or 2, characterized in that the second visual information comprises visual information about the retina of the eye of the animal, so that on the basis of, for instance, the position of the blind spot or the pattern of the visible blood vessels, it can be established to which eye the first visual information relates.

6. A method according to claim 1 or 2, characterized in that the second visual information comprises visual information about the immediate surroundings of the eye of the animal, so that, as it were, on the basis of, for instance, the shape of the eyelids or the eyelashes it can be determined to which eye the first visual information relates.

7. A method according to any one of the preceding claims, characterized in that further the time at which the first and second visual information are obtained is stored, in combination with the first and second visual information, for further processing.

8. A method according to any one of the preceding claims, characterized in that further the place where the first and second visual information has been obtained is stored, in combination with the first and second visual information, for further processing.

9. A method according to any one of the preceding claims, characterized in that further the life number of the animal is stored in combination with the first and second visual information for further processing.

10. A method according to any one of the preceding claims, characterized in that further an identification code of the image recording apparatus is stored in combination with the first and second visual information for further processing.

11. A method according to any one of the preceding claims, characterized in that the information which is stored for further processing is coded.

12. A method according to any one of the preceding claims, characterized in that the image recording apparatus which is used comprises a first camera for obtaining the first visual information and a second camera for obtaining the second visual information.

13. A method according to any one of the preceding claims, characterized in that a first image recording is made for obtaining the first visual information and a second image recording is made for obtaining the second visual information.

14. A method according to claim 13, characterized in that the first and second image recording are made approximately simultaneously.

15. A method according to any one of the preceding claims, characterized in that the second visual information comprises a side view of at least a part of the head of the animal.

16. A method according to any one of the preceding claims, characterized in that on the basis of the second visual information the age of the animal can be estimated at the moment at which the first and second visual information has been obtained.

17. A method according to claim 16, characterized in that further birth information is stored about the birth date of the animal and that this birth information is used to check whether the estimate age agrees with the birth information.

18. A method according to any one of the preceding claims, characterized in that the first and second visual information, by means of the image recording apparatus, are stored in mutual relationship in a relational database for further processing.

19. A method according to claim 18, characterized in that for determining the identity of the animal by means of the image recording apparatus first visual information is obtained about at least one of the eyes of the animal, and second visual information is obtained, the first visual information being used for obtaining visual eye information about the appearance of an iris and/or a retina of the at least one eye, the second visual information being suitable to determine to which eye of the animal the visual eye information relates, and wherein by means of a computer, on the basis of the first visual information and a database in which the identity of the animal, together with corresponding first visual information of a multiplicity of animals, is stored, the identity of the animal is determined by comparing the first visual information of the animal with the first visual information of the animals as stored in the database and selecting from the database the first visual information that agrees with the first visual information which has been obtained from the animal.

20. A method according to claim 18, characterized in that for verifying the identity of the animal, by means of the image recording apparatus, first visual information is obtained about at least one of the eyes of the animal, and second visual information is obtained, the first visual information being used for obtaining visual eye information about the appearance of an iris and/or a retina of the at least one eye, the second visual information being suitable to determine to which eye of the animal the visual eye information relates, and wherein by means of a computer, on the basis of the presumed identity of the animal and a database in which the first visual information and the associated identity of a multiplicity of animals are stored, the first visual information from the database associated with the presumed identity of the animal is compared with the first visual information which has been obtained by means of the image recording apparatus.

21. A method for identifying an animal, characterized in that for the identification of the animal, by means of at least one image recording apparatus, first visual information is obtained about an eye of the animal, and second visual information is obtained from the animal, the second visual information being suitable for determining to which eye of the animal the visual eye information relates, the first visual information being used for obtaining visual eye information about the appearance of an iris and/or a retina of the eye, and wherein by means of a computer, on the basis of the obtained first visual information and a database in which the identity of a multiplicity of animals together with corresponding first visual information is stored, the identity of the animal is determined by selecting from the database the first visual information that agrees with the first visual information obtained from the animal.

22. A method for verifying the identity of an animal, characterized in that by means of at least one image recording apparatus first visual information is obtained about an eye of the animal, and second visual information is obtained from the animal, the second visual information being suitable for determining to which eye of the animal the visual eye information relates, the first visual information being used for obtaining visual eye information about the appearance of an iris and/or a retina of the eye, and wherein by means of a computer, on the basis of the presumed identity of the animal and a database in which the identity of a multiplicity of animals together with the corresponding first visual information is stored, the associated first visual information is selected and is compared with the first visual information such as it has been obtained by means of the image recording apparatus.

23. A method according to claim 21 or 22, characterized in that further the time at which the first and second visual information has been obtained is determined for further processing.

24. A method according to any one of claims 21-23, characterized in that further the place where the first and second visual information have been obtained is determined for further processing.

25. A method according to any one of the preceding claims 21-24, characterized in that further an identification code of the image recording apparatus is determined for further processing.

26. A method according to any one of the preceding claims 21-25, characterized in that an image recording apparatus is used which comprises a first camera for obtaining the first visual information and a second camera for obtaining the second visual information of the animal.

27. A method according to any one of the preceding claims 21-26, characterized in that a first image recording is made for obtaining the first visual information of the animal, and a second image recording is made for obtaining the second visual information of the animal.

28. A method according to any one of the preceding claims 21-27, characterized in that the first and second visual information are obtained approximately simultaneously.

29. A method according to any one of the preceding claims 21-28, characterized in that the second visual information shows the eye of the animal to which the visual eye information relates, such that on the basis of the second visual information it can be established to which eye of the animal the visual eye information relates.

30. A method according to any one of the preceding claims 21-29, characterized in that the second visual information is obtained in such a manner that said eye is located at a predetermined position in the second visual information if the visual eye information relates to said eye.

31. A method according to any one of the preceding claims 21-30, characterized in that the second visual information comprises visual information about the retina of the eye of the animal, so that on the basis of, for instance, the position of the blind spot or the pattern of the visible blood vessels, it can be determined to which eye the first visual information relates.

32. A method according to any one of the preceding claims 21-31, characterized in that the second visual information comprises visual information about the immediate surroundings of the eye of the animal, so that, as it were, on the basis of, for instance, the form of the eyelids or the eyelashes it can be determined to which eye the first visual information relates.
